(19) Europäisches Patentamt
European Patent Office
Office européen des brevets

(11) **EP 2 536 295 B1**

(12) **EUROPEAN PATENT SPECIFICATION**

(45) Date of publication and mention
of the grant of the patent:
**11.04.2018 Bulletin 2018/15**

(51) Int Cl.:
***A23K 50/10*** (2016.01)     ***A23K 10/16*** (2016.01)
***A23K 20/147*** (2016.01)

(21) Application number: **11743016.5**

(86) International application number:
**PCT/US2011/024940**

(22) Date of filing: **15.02.2011**

(87) International publication number:
**WO 2011/100763 (18.08.2011 Gazette 2011/33)**

(54) **RUMINANT DIETARY SUPPLEMENT COMPOSITIONS AND METHODS OF MANUFACTURING AND USING THE SAME**

NAHRUNGSERGÄNZUNGSZUSAMMENSETZUNGEN FÜR WIEDERKÄUER SOWIE VERFAHREN ZU DEREN HERSTELLUNG UND VERWENDUNG

COMPOSITIONS DE SUPPLÉMENT ALIMENTAIRE POUR RUMINANTS ET PROCÉDÉS DE FABRICATION ET D'UTILISATION ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.02.2010 US 304739 P**

(43) Date of publication of application:
**26.12.2012 Bulletin 2012/52**

(73) Proprietor: **Alltech, Inc.**
**Nicholasville, KY 40356 (US)**

(72) Inventors:
• **TRICARICO, Juan M.**
**Nicholasville, Kentucky 40356 (US)**
• **DAWSON, Karl A.**
**Nicholasville, Kentucky 40356 (US)**
• **JOHNSTON, James D.**
**Nicholasville, Kentucky 40356 (US)**

(74) Representative: **Grünecker Patent- und Rechtsanwälte**
**PartG mbB**
**Leopoldstraße 4**
**80802 München (DE)**

(56) References cited:
WO-A1-2006/001968     WO-A2-2006/099153
KR-B1- 0 173 503     KR-B1- 100 385 929
US-A- 3 619 200     US-A- 4 199 561
US-A- 5 767 080     US-B1- 6 231 895

• **N D Fastinger ET AL: "Effect of soybean meal particle size on amino acid and energy digestibility in grower-finisher swine 1,2,3,4 Introduction", Animal Science J. Anim. Sci, 1 January 2003 (2003-01-01), pages 697-704, XP055242631, Retrieved from the Internet: URL:http://nutrition.ansci.illinois.edu/si tes/default/files/JAnimSci81.697-704.pdf**
• **NETEMEYER D T ET AL: "EFFECT OF PARTICLE SIZE OF SOYBEAN MEAL ON PROTEIN UTILIZATION IN STEERS AND LACTATING COWS", JOURNAL OF DAIRY SCIENCE, AMERICAN DAIRY SCIENCE ASSOCIATION, US, vol. 63, no. 4, 1 January 1980 (1980-01-01), pages 574-578, XP009188048, ISSN: 0022-0302**

## Description

## FIELD OF THE INVENTION

This invention relates to dietary supplement compositions, foodstuffs (e.g., animal feed) comprising the same and methods of utilizing the same. In particular, the invention provides ruminant dietary supplement compositions (e.g., comprising a protein extract (e.g., a crude protein extract (e.g., a bacterial or yeast extract))) having a specific nitrogen and/or amino acid profile and a small particle size, methods of manufacturing the same, and compositions containing and methods of using the same (e.g., as a liquid or dry dietary supplement composition or as a component of a foodstuff (e.g., animal feed) to increase ruminant protein and amino acid absorption).

## BACKGROUND

Dairy cows require nitrogen (N) in the form of intestinally absorbed amino acids (AA) for maintenance and production needs. There are two sources that supply intestinally absorbed AA to the ruminant. One source of intestinally absorbed AA is microbial protein resulting from ruminal microbial growth. Rumen microbes need fermentable carbohydrates and rumen-degradable feed protein (RDP) to grow. Feed may supply RDP in the form of true protein and/or nonprotein N (NPN) since ruminal microbes can absorb AA or synthesize them from ammonia-N produced from ruminal AA degradation. Ruminally synthesized microbial protein supplies high quality intestinally absorbed AA because of its high digestibility and AA profile. The other source of intestinally absorbed AA is ruminally undegraded feed protein (RUP). RUP is composed of true protein supplied by the feed that escapes ruminal fermentation, is digested postruminally, and the component AA are absorbed in the intestine.

The objective of ruminant protein nutrition is to feed the ruminant animal combinations of feedstuffs that minimize the total amount of dietary N while providing adequate amounts and types of RDP and RUP that allow the desired level of productivity. Thus, ruminant nutritionists focus on maximizing ruminal synthesis of high quality microbial protein. However, ruminal microbial growth has an upper limit and dietary sources of highly digestible RUP that provide an adequate AA profile must be fed to the dairy cow to achieve satisfactory levels of milk production.

Ruminant nutritionists continually try to optimize the supply of RDP and RUP to the diary cow with the use of various feedstuffs and commercial sources of RUP commonly referred to as ruminally protected proteins. Commercially available sources of ruminally protected proteins include animal and vegetable proteins, and single AA protected from ruminal degradation by physical and/or chemical treatments. The literature includes numerous publications on the development and evaluation of ruminally protected protein sources. Feeding ruminally protected protein sources to obtain increased ruminant productivity while minimizing total feed N supply is elusive. The reviews by Santos et al. (1998) and Ipharraguerre and Clark (2005) demonstrate difficulties associated with feeding ruminally protected protein sources with the intent of increasing dairy cow productivity.

US 4,199,561 relates to coatings for nutrients or therapeutic su bstances for administration to ruminants; US 3,619,200 discloses feed compositions for ruminants comprising proteinaceous feed material, which is treated to be resistant to breakdown within the rumen; WO 2006/001968 describes animal feed compositions having an enhanced amount of histidine; WO 2006/099153 relates to proteinaceous feed ingredients which are treated with a moist heat treatment and have increased amounts of proteinaceous matter that escapes fermentation within the rumen; US 6,231,895 discloses feedstocks for ruminants; US 5,767,080 relates to increasing milk production in a dairy cow; Netemeyer et al., J. Dairy Sci. 1980, 63, 574-578 disclose the effect of particle size of soybean meal on protein utilization; Fastinger et al., J. Anim. Sci. 2003, 81, 697-704 describe the effect of particle size of soybean meal on amino acid and energy digestibility.

## SUMMARY OF THE INVENTION

The objective problem of the present invention is solved on the basis of claims 1 to 13.

The present invention is directed to a protein rich ruminant dietary supplement composition comprising about 5-10% nitrogen, 30-60% crude protein, and 0.5% to 1.5% ammonia on a dry matter basis, wherein said composition is made up of dried particles of 0.100-0.500 mm in size, preferably 0.100-0.250 mm in size, wherein said composition is free of a protective barrier derived from physical or chemical treatment of the composition, and wherein said crude protein is derived from a source selected from the group consisting of whole yeast, yeast extract, algae and bacteria.

This invention relates to dietary supplement compositions, foodstuffs (e.g., animal feed) comprising the same and methods of utilizing the same. In particular, the invention provides ruminant dietary supplement compositions (e.g., comprising a protein extract (e.g., a crude protein extract (e.g., a bacterial or yeast extract)) having a specific nitrogen and/or amino acid profile and a small particle size, methods of manufacturing the same, and compositions containing and methods of using the same (e.g., as a liquid or dry dietary supplement composition or as a component of a foodstuff (e.g., animal feed) to increase ruminant protein and amino acid absorption).

Accordingly, in some embodiments, the invention provides a dietary supplement composition comprising a protein component (whole yeast and/or protein extract ( crude protein extract (yeast, bacterial, and/or algae protein extract (e.g. with a specific nitrogen and/or amino acid profile) that is prepared as a fine particulate matter (e.g., a composition comprising particles of 0.100-0.500 mm, 0.25-0.5 mm, 0.125-0.250 mm in size. In a preferred embodiments, a dietary supplement composition of the invention is prepared as a fine particulate matter having a particle size of about 125-250 μm. The dietary supplement composition comprises 5-10% nitrogen and 30-60% crude protein. In a preferred embodiment, the dietary supplement composition comprises, on a dry matter basis, 6.5-7.8% nitrogen and 40-50 % crude protein. In a further preferred embodiment, the dietary supplement composition comprises 7% nitrogen and 45.3 % crude protein on a dry matter basis. In some embodiments, the crude protein is comprised of both soluble and insoluble fractions. For example, in some embodiments, the crude protein has 25-60% soluble and 40-75% insoluble protein. In some embodiments, the crude protein has 36-46% soluble protein and 53-63% insoluble protein. In some embodiments, the crude protein has 40-45% soluble protein and 55-60% insoluble protein. In some embodiments, the crude protein has 42% soluble protein and 58% insoluble protein. In some embodiments, the dietary supplement composition comprises, on a dry matter basis, 0.5% to 1.5% ammonia. In some embodiments, the dietary supplement composition comprises a protein component (e.g., protein extract) comprising an amino acid profile as shown in Table 1 or Table 2. In some embodiments, the amino acid profile of a protein component of a dietary supplement composition of the invention comprises a percentage of the different amino acids as shown in Table 1 or Table 2, plus or minus a certain percentage (e.g., plus or minus 1, 2, 3, 4, 5, 6, 7, 8, 9, 10 or more percent). In some embodiments, the protein component of the dietary supplement composition is a yeast cell extract. In some embodiments, the protein component of the dietary supplement composition is whole yeast. In some embodiments, the protein component of the dietary supplement composition is a microbial cell extract. In some embodiments, the protein component of the dietary supplement composition is an algae cell extract. Methods of making cell extracts are well known in the art. In some embodiments, a yeast cell extract is prepared by growing yeast, separating the yeast cell wall from from intracellular yeast components (e.g., using centrifugation), and removing the yeast cell wall material to produce a yeast extract. ("yeast extract" only). Any yeast and/or yeast strain known in the art finds use as a source of the dietary supplement composition of the invention, including, a yeast from the genus *Saccharomyces, Candida, Kluyveromyces, Torulaspora* and/or combinations thereof. In some embodiments, the yeast is *Saccharomyces cerevisiae.* Once a protein source (e.g., whole yeast and /or a yeast, algae or microbial extract) is obtained, a dietary supplement composition of the invention can be generated therefrom. For example, in a preferred embodiment, the protein source (e.g., whole yeast or protein extract (e.g., yeast, algae, or microbial extract) is dried using atomization. In a preferred embodiment, atomization produces a dried material (e.g., dried whole yeast or protein extract) containing particles of a desired size (e.g., dried material contain particles between 0.100-0.500 mm, or more preferably 0.100-0.250 mm). In some embodiments, an atomizer nozzle is selected to produce a dried material containing particles of a desired size. The invention is not limited by the method utilized to dry the protein source (e.g., whole yeast or yeast, algae or microbial extract). Indeed, a variety of methods may be used including freeze drying, spray drying, drum drying, fluid bed drying). Moreover, additional steps may be taken to generate a dietary supplement composition containing a particle sizes of a desired range including grinding and/or sieving the dried protein (e.g., whole yeast or yeast or microbial extract).

The invention is not limited by the method of administering a dietary supplement composition to subject (e.g., a ruminant (e.g., an adult ruminant). Indeed, a dietary supplement composition of the invention can be administered to the ruminant in a number of different ways. For example, a dietary supplement composition can be combined with an orally ingestible feed additive to form a supplement or premix to be added to standard feeds. In some embodiments, a dietary supplement composition is added directly to a standard feed (e.g., a ruminant feed). For example, a dietary supplement composition can be added to a standard feed or feed additive as broth or broth equivalent, or paste or as a lyophilized material. In some embodiments, a dietary supplement composition is prepared as a fine particulate matter (e.g., having a particulate size of 0.25-0.5 mm, or 0.125-0.250 mm). that is added to feed. The dietary supplement composition can be added to a carrier and/or encapsulated prior to addition to feed. In some embodiments, a dietary supplement composition (e.g., prepared as a fine particulate matter) is added directly to animal feed (e.g., by sprinkling a liquid broth containing the composition over the feed or by adding a dry particulate form of the supplement composition to the feed).

In some embodiments, a dietary supplement composition is administered to a subject (e.g., a ruminant (e.g., a dairy cow)) as a proportion of total daily dry matter intake. For example, in some embodiments, a dietary supplement composition is administered to a subject (e.g., dairy cow) as 1.5%-2.5% of the subject's total daily dry matter intake, although lesser (e.g., 1.25%, 1.0%, 0.75%,0.5%, 0.25%, or less) and greater (e.g., 2.75%, 3%, 3.25%, 3.5%, 4%, or more) amounts of the dietary supplement composition may be administered. In a preferred embodiment, a dietary supplement composition is administered to a subject (e.g., dairy cow) as 1.5%-2.5% of the subject's total daily dry matter intake. For example, if a cow consumes 23 kg of dry matter in a day the amount of dietary supplement composition intake is between 345g and 575 g.

A dietary supplement composition is added to and/or combined with any orally ingestible feed including distillers' dried grains, alfalfa, corn meal, citrus meal, fermentation residues, ground oyster shells, attapulgus clay, wheat shorts, molasses solubles, corn cob meal, edible vegetable substances, toasted dehulled soya flour, soybean mill feed, antibiotic mycelis, vermiculite, soya grits, crushed limestone and the like. A dietary supplement composition is added to standard feeds such as "concentrates" which are low in fiber and high in total digestible nutrients. This class includes the various grains and high grade by-products such as hominy feed, wheat bran, cottonseed meal, linseed meal, corn gluten feed, etc. A dietary supplement composition is also useful for addition to roughage feeds, which are high in fiber, or mixtures of roughage and concentrate feeds.

In some embodiments, the invention provides a method of raising livestock (e.g., ruminants) on a nutritionally balanced diet comprising providing livestock and an animal feed composition containing a dietary supplement composition described herein and administering the animal feed composition to the livestock under conditions such that livestock characteristics (e.g., milk production and quality characteristics) are attained (e.g., such that the milk quality and or amount produced is superior to that obtained in a control subject not administered the dietary supplement composition). In some embodiments, milk produced by a cow fed a dietary supplement composition of the invention enjoys a longer shelf life compared to milk produced from a cow not fed a dietary supplement composition of the invention. In some embodiments, milk produced by a cow fed a dietary supplement composition of the invention contains increased amount of milk fat and/or protein secretions compared to milk produced from a cow not fed a dietary supplement composition of the invention. Thus, the present invention provides, in some embodiments, a decrease cost associated with producing milk and or milk components. In some embodiments, using a dietary supplement composition in feed reduces nitrogen excretion from a ruminant and/or improves nitrogen efficiency.

A variety of methods may be used including atomization, mechanical grinding, sieving or other method known in the art that reduces particle size of a material. In some embodiments, any method known in the art that is able to generate particulate matter (e.g., comprising particles of 1-2 mm, 0.5-1 mm, 0.25-0.5 mm, 100-200 $\mu$m, 125-250 $\mu$m, 62.5-125 $\mu$m, or 3.9-62.5 $\mu$m)) from a material can be used. (e.g., to produce a dietary supplement composition). According to the invention the size of the dried particles is of 0.100 to 0.500 mm. In a preferred embodiment, the particle size of a dietary supplement composition is of a size that allows the dietary supplement composition to escape ruminal fermentation (e.g., by flowing at the liquid flow rate in the rumen of a ruminant) in greater amount than a feed or foodstuff that is not comprised of the dietary supplement composition).

In some embodiments, the present invention relates to methods of feeding livestock comprising administering animal feed to the livestock comprising the protein compositions described above and below. According to the invention the livestock is a cow or other ruminant.

## BRIEF DESCRIPTION OF THE FIGURES

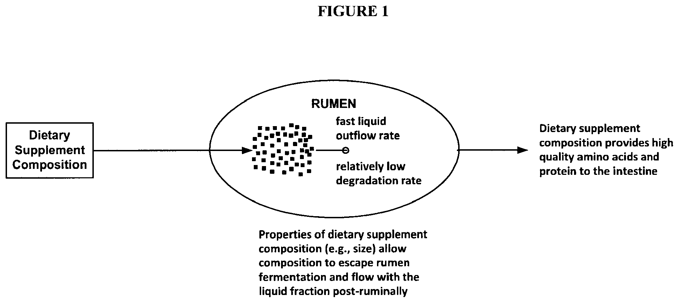

Figure 1 shows an exemplary dietary escape of a dietary supplement composition of the invention.
Figure 2 shows the ingredient and chemical composition of rations used in studies conducted during development of embodiments of the invention.
Figure 3 shows the effects of a dietary supplement composition (termed "DEMP" in the figure) on milk production and blood metabolites observed during development of embodiments of the invention.
Figure 4 shows the ingredients of experimental diets of utilized in Example 2.
Figure 5 shows the nutrient composition of experimental diets utilized in Example 2 based on individual ingredient analyses done by DairyLand Laboratories Inc. (Arcadia, WI).
Figure 6 shows the total mixed rations (TMR) utilized in Example 2 analyzed by DairyLand Laboratories Inc. (Arcadia, WI).
Figure 7 shows milk production and milk content results utilizing various experimental diets containing a dietary supplement composition of the invention.

## DEFINITIONS

As used herein, the term "yeast" and "yeast cells" refers to eukaryotic microorganisms classified in the kingdom Fungi, having a cell wall, cell membrane and intracellular components. Yeasts do not form a specific taxonomic or phylogenetic grouping. Currently about 1,500 species are known; it is estimated that only 1% of all yeast species have been described. The term "*yeast*" is often taken as a synonym for *S. cerevisiae*, but the phylogenetic diversity of yeasts is shown by their placement in both divisions Ascomycota and Basidiomycota. The budding yeasts ("true yeasts") are classified in the order Saccharomycetales. Most species of yeast reproduce asexually by budding, although some reproduce by binary fission. Yeasts are unicellular, although some species become multicellular through the formation of a string of connected budding cells known as *pseudohyphae*, or *false hyphae.* Yeast size can vary greatly depending on the species, typically measuring 3-4 $\mu$m in diameter, although some yeast can reach over 40 $\mu$m.

As used herein, the terms "selenium-enriched yeast" and "selenized yeast" refer to any yeast (e.g., *Saccharomyces cerevisiae*) that is cultivated in a medium containing inorganic selenium salts.

As used herein, the term w/w (weight/weight) refers to the amount of a given substance in a composition on weight basis. For example, an animal feed comprising 0.02% w/w dietary feed supplement of the invention means that the mass of the dietary feed supplement is 0.02% of the total mass of the animal feed (i.e., 200 grams of dietary feed supplement composition of the invention in 907,200 grams of animal feed).

As used herein, the term "yeast cell wall" also referred to as "YCW" refers to the cell wall of a yeast organism that surrounds the plasma membrane and the intracellular components of the yeast. Yeast cell wall includes both the outer layer (mainly mannan) and the inner layer (mainly glucan and chitin) of the yeast cell wall. A function of the cell wall is to provide structure and protect the metabolically active cytoplasm. Signaling and recognition pathways take place in the yeast cell wall. The composition of yeast cell wall varies from strain to strain and according to growth conditions of yeast.

As used herein, the term "yeast intracellular components" and "intracellular components" refers to the cell contents extracted from a yeast organism by removing the cell walls.

As used herein, the term "purified" or "to purify" refers to the removal of components from a sample. For example, yeast cell walls or yeast cell wall extracts are purified by removal of non-yeast cell wall components (e.g., plasma membrane and/or yeast intracellular components); they are also purified by the removal of contaminants or other agents other than yeast cell wall. The removal of non-yeast cell wall components and/or non-yeast cell wall contaminants results in an increase in the percent of yeast cell wall or components thereof in a sample.

As used herein, the term "digest" refers to the conversion of food, feedstuffs, or other organic compounds into absorbable form; to soften, decompose, or break down by heat and moisture or chemical action.

As used herein, "digestive system" refers to a system (including gastrointestinal system) in which digestion can or does occur.

As used herein, the term "feedstuffs" refers to material(s) that are consumed by animals and contribute energy and/or nutrients to an animal's diet. Examples of feedstuffs include Total Mixed Ration (TMR), forage(s), pellet(s), concentrate(s), premix(es) coproduct(s), grain(s), distiller grain(s), molasses, fiber(s), fodder(s), grass(es), hay, kernel(s), leaves, meal, soluble(s), and supplement(s).

As used herein, the terms "food supplement" "dietary supplement" "dietary supplement composition" refer to a food product formulated as a dietary or nutritional supplement to be used as part of a diet, e.g. as an addition to animal feed. Exemplary dietary supplement compositions are described herein.

As used herein, the term "animal" refers to those of kingdom Animalia. This includes, but is not limited to livestock, farm animals, domestic animals, pet animals, marine and freshwater animals, and wild animals.

As used herein, "effective amount" refers to the amount of a composition sufficient to effect beneficial or desired results. An effective amount can be administered and/or combined with another material in one or more administrations, applications or dosages.

As used herein, the term "digest" refers to the conversion of food, feedstuffs, or other organic compounds into absorbable form; to soften, decompose, or break down by heat and moisture or chemical action.

As used herein, "digestive system" refers to a system (including gastrointestinal system) in which digestion can or does occur.

As used herein, the term "administration" and the term "administering" refer to the act of giving a substance, including a drug, prodrug, or other agent, or therapeutic treatment to a subject.

As used herein, the term "cell" refers to an autonomous self-replicating unit that may exist as functional independent unit of life (as in the case of unicellular organism, e.g., yeast), or as a sub-unit in a multicellular organism (such as in plants and animals) that is specialized into carrying out particular functions towards the cause of the organism as a whole. There are two distinct types of cells: prokaryotic cells and eukaryotic cells.

As used herein, the term "eukaryote" refers to organisms whose cells are organized into complex structures enclosed within membranes. "Eukaryotes" are distinguishable from "prokaryotes." The term "prokaryote" refers to organisms that lack a cell nucleus or other membrane-bound organelles. The term "eukaryote" refers to all organisms with cells that exhibit typical characteristics of eukaryotes, such as the presence of a true nucleus bounded by a nuclear membrane, within which lie the chromosomes, the presence of membrane-bound organelles, and other characteristics commonly observed in eukaryotic organisms.

As used herein, the term "yeast reproduction" refers to the reproduction cycle of yeast, which have asexual and sexual reproductive cycles, however the most common mode of vegetative growth in yeast is asexual reproduction by "budding" or "fission" with a "daughter cell" that is formed on the "parent cell." The nucleus of the parent cell splits into a daughter nucleus and migrates into the daughter cell. The bud continues to grow until it separates from the "parent cell", forming a new cell. Under high stress conditions haploid cells will generally die, however under the same conditions diploid cells can undergo sporulation, entering sexual reproduction (meiosis) and producing a variety of haploid spores which can go on to mate (conjugate), reforming the diploid.

As used herein, the term "budding" refers to a type of cell division in fungi (e.g., yeast) and in protozoa in which one of the "daughter cells" develops as a smaller protrusion from the other. Usually the position of the budding cell is defined by polarity in the "parent cell". In some protozoa the budded daughter may lie within the cytoplasm of the other daughter.

As used herein, the term "cultivate yeast" and the term "growing yeast" refer to the act of populating and/or propagating yeast.

As used herein, the term "centrifugation" refers to the separating of molecules by size or density using centrifugal forces generated by a spinning rotor that puts an object in rotation around a fixed axis, applying a force perpendicular to the axis. The centrifuge works using the sedimentation principle, where the centripetal acceleration is used to evenly distribute substances of greater and lesser density into different layers of density.

As used herein, the term "harvest" refers to the act of collecting or bringing together materials that have been produced (e.g. bringing together materials produced during yeast production).

As used herein, the term "drying" refers to spray drying, freeze drying, air drying, vacuum drying or any other kind of process that reduces or eliminates liquid in a substance.

As used herein, the term "spray drying" refers to a commonly used method of drying a substance containing liquid using hot gas to evaporate the liquid to reduce or eliminate liquid in the substance. In other words, the material is dried byway of spraying or atomizing into a draft of heated dry air.

As used herein, the term "freeze drying" and the term "lyophilization" and the erm "cryodesiccation" refer to the removal of a solvent from matter in a frozen state by sublimation. This is accomplished by freezing the material to be dried below is eutectic point and then providing the latent heat of sublimation. Precise control of heat input permits drying from the frozen state without product melt-back. In practical application, the process is accelerated and precisely controlled under reduced pressure conditions.

As used herein, the term "grinding" refers to reducing particle size by impact, shearing or attrition.

As used herein, the term "washing" refers to the removal or cleansing (e.g., using any type of solute (e.g. distilled water, buffer, or solvent) or mixture) of impurities or soluble unwanted component of a preparation.

As used herein, the term "protein" refers to biochemical compounds consisting of one or more polypeptides typically folded into a globular or fibrous form in a biolotically functional way.

As used herein, the term "peptide," and the term "polypeptide" refer to a primary sequence of amino acids that are joined by covalent "peptide linkages." Generally, a peptide consists of a few amino acids, and is shorter than a protein. Peptides, polypeptides or proteins can be synthetic, recombinants or naturally occurring.

As used herein, the term "amino acid" refers to molecules containing an amine group, a carboxylic acid group and a side chain that varies between different amino acids. The key elements of an amino acid are carbon, hydrogen, oxygen, and nitrogen.

As used herein, the term "protease" refers to any of various enzymes, including the endopeptidases and exopeptidases that catalyze the hydrolytic breakdown of proteins into peptides or amino acids.

As used herein, the term "lysis" refers to the disintegration or rupture of the yeast cell membrane and yeast cell wall resulting in the release of the intracellular components. As used herein, "lysis" occurs as a result of physical, mechanical, enzymatic (including autolysis and hydrolysis) or osmotic mechanisms.

As used herein, the term "autolysis" refers to the breakdown of a part or whole cell or tissue by self-produced enzymes.

As used herein, the term "hydrolysis" refers to the process of splitting a compound into fragments with the addition of water (e.g., that is used to break down polymers into simpler units (e.g., starch into glucose)).

As used herein, the term "ruminant" refers to a mammal of the order Artiodactyla that digests plant-based food by initially softening it within the animals first stomach, then regurgitating the semi-digested mass, now known as cut, and chewing it again. The process of rechewing the cud to further break down plant matter and stimulate digestion is called "ruminating." There are about 150 species of ruminants which include both domestic and wild species. Ruminating mammals include cattle, goats, sheep, giraffes, bison, moose, elk, yaks, water buffalo, deer, alpacas, camels, llamas, wildebeest, antelope, pronghorn, and nilgai.

As used herein, the term "rumen" (also known as a paunch) forms the larger part of the reticulorumen, which is the first chamber in the alimentary canal of ruminant animals. It serves as the primary site for microbial fermentation of ingested feed. The smaller part of the reticulorumen is the reticulum which is fully continuous with the rumen, but differs from it with regard to the texture of the lining. The rumen is composed of several muscular sacs, the cranial sac, ventral sac, ventral blindsac, and reticulum.

## DETAILED DESCRIPTION

This invention relates to dietary supplement compositions, foodstuffs (e.g., animal feed) comprising the same and methods of utilizing the same. In particular, the invention provides ruminant dietary supplement compositions (e.g., comprising a protein extract (e.g., a crude protein extract (e.g., a bacterial or yeast extract))) having a specific nitrogen and/or amino acid profile and a small particle size, methods of manufacturing the same, and compositions containing and methods of using the same (e.g., as a liquid or dry dietary supplement composition or as a component of a foodstuff (e.g., animal feed) to increase ruminant protein and amino acid absorption).

In certain embodiments, the invention provides a protein-rich dietary supplement composition (e.g., of yeast origin, or other origin) with physical characteristics that provide substantial escape from rumen fermentation and an amino acid (AA) profile similar to ruminal microbial protein. In some embodiments, the protein-rich dietary supplement composition is referred to as escape microbial protein (EMP) or dietary escape microbial protein (DEMP), for example in Table 2.

In some embodiments, the protein rich dietary supplement composition (e.g., derived from yeast or microbial source) is processed into a fine particle size. Although an understanding of the mechanism is not necessary to practice the invention, and the invention is not limited to any particular mechanism of action, in some embodiments, the fine particle size of the dietary supplement composition allows the supplement composition to flow with the liquid fraction post ruminally where amino acids are absorbed in the intestine. While the invention is not limited to any particular mechanism, and an understanding of the mechanism is not necessary to understand or practice the invention, in some embodiments, the utility of the dietary supplement composition takes advantage of one or more of the following 1) the composition of the material (e.g., having a specific nitrogen and/or amino acid profile; 2) the fine particle size (e.g., described herein) of the material (e.g., that allows it to partition into the ruminal liquid fraction; 3) the relatively low fractional rate of degradation of the material (e.g., $0.175\ h^{-1}$); and/or 4) the relatively high fractional rate of liquid outflow from the rumen (e.g., $0.12\ h^{-1}$).

A significant benefit of a protein rich dietary supplement composition of the invention is that it need not be protected (e.g., using physical or chemical treatments (e.g., encapsulation)) from ruminal degradation. For example, in some embodiments, a protein rich dietary supplement composition of the invention need not have a protective barrier applied. Instead, the invention provides a protein rich dietary supplement composition (e.g., of yeast origin) wherein the physical and/or chemical properties of the dietary supplement composition (e.g., nitrogen and/or amino acid content or profile, fine particle size, low degradation rate of the composition) allows the dietary supplement composition to escape ruminal fermentation (e.g., by flowing at the liquid flow rate) and provide a significant amount of highly digestible ruminally undegraded feed protein with a desirable amino acid profile to the intestines.

In some embodiments, the dietary supplement composition is a yeast cell extract. A yeast organism used for the composition of the present invention may be any of a number of yeasts including, but not limited to, a yeast of the genus *Saccharomyces*, *Candida*, *Kluyveromyces*, or *Torulaspora* species, or a combination thereof. In a preferred embodiment, the yeast used is *Saccharomyces cerevisiae.* In a preferred embodiment, the yeast used is *Saccharomyces cerevisiae* strain 1026. Yeast extract is obtained by methods commonly known in the art (See, e.g., Peppler, H.J. 1979. Production of yeasts and yeast products. In Microbial Technology & Microbial Processes, Vol. 1 (2d ed.), Academic Press). The yeast organism is grown following common techniques used in food-related fermentations and the beverage industries. The yeast biomass is separated and washed by centrifugation to yield a yeast cream. Following separation, the organism is lysed. Any of a number of methods common in the art may be utilized to lyse the yeast organism, including hydrolysis and autolysis. A preferred embodiment of the current invention allows the yeast organisms to autolyse at room temperature and pressure over a 12-24 hour period. A protease such as papain or any of a number of alkaline or neutral proteases may be added during the lysis phase to accelerate solubilization of yeast proteins and prevent agglutination of intracellular components. Following lysis, the intracellular components of the yeast organism are separated and removed from the yeast cell wall. In a preferred embodiment, the intracellular components are removed from the yeast cell wall material by washing several times by centrifugation. The resulting yeast extract may be dried by any of a number of methods common in the art, including spray-drying, drum drying and fluid bed drying to form a powder. In a preferred embodiments, the dried yeast extract powder is made into a fine powder (e.g., by means of grinding, sieving, or otherwise wearing down). In a preferred embodiment, resulting yeast extract is dried by atomization. For example, a yeast extract is pumped into a atomizer (e.g., nozzle-type or centrifugal atomizer) that creates a fine mist of yeast extract particles. The fine mist of yeast extract particles is contacted with air that is heated to temperatures of 250-450°C which dries the particles. The dried yeast extract particles are collected. In some embodiments, the atomizer is configured to generate dried yeast particles of a desired size. In other embodiments, dried yeast extract particles are further ground, sieved, or otherwise broken down into smaller particles after exiting the atomizer.

There is a general assumption in the field that soluble protein is completely degraded in the rumen due to a purported high fractional rate of degradation. In situ incubation is the most widely accepted procedure for the experimental determination of rumen-degradable feed protein (RDP) and rumen-undegraded feed protein (RUP) contributions by a feed. This procedure estimates protein disappearance from feed placed inside a porous bag suspended in the rumen of a ruminally-cannulated animal. Disappearance is determined by weight difference with soluble and very small insoluble particles that wash out of the bag assumed to be immediately available and completely utilized by ruminal microbes. Using a method described by Raab et al. (See Raab et al. (1983), experiments were conducted to determine the fractional rate of protein degradation of a dietary supplement composition of the invention. Using the method of Raab et al., the fractional rate of protein degradation of the dietary supplement composition described in Table 1 was determined to be $0.175\ h^{-1}$ (SD= 0.052).

**TABLE 1**

| % DM | EMP | Rumen Bacteria[1] |
|---|---|---|
| N | 7.3 | 7.7 |
| CP | 45.3 | 48.1 |
| Soluble CP, % CP | 41.9 | -- |
| Insoluble CP, % CP | 58.1 | -- |
| $NH_3$ | 1.0 | -- |
| Amino acids | 39.9 | 32.0 |

(continued)

| % DM | EMP | Rumen Bacteria[1] |
|---|---|---|
| | % total amino acids | |
| Alanine | 7.3 | 7.5 |
| Arginine | 6.0 | 5.1 |
| Aspartic acid | 10.4 | 12.2 |
| Cystine | 1.4 | -- |
| Glutamic acid | 16.5 | 13.1 |
| Glycine | 5.0 | 5.8 |
| Histidine | 2.5 | 2.0 |
| Isoleucine | 5.1 | 5.7 |
| Leucine | 9.5 | 8.1 |
| Lysine | 6.7 | 7.9 |
| Methionine | 2.1 | 2.6 |
| Phenylalanine | 5.1 | 5.1 |
| Proline | 5.5 | 3.7 |
| Serine | 5.7 | 4.6 |
| Threonine | 5.3 | 5.8 |
| Tryptophan | 1.4 | -- |
| Valine | 5.8 | 6.2 |

[1]Clark et al., 1992

A dietary supplement composition of the invention has, as a percentage of dry material, 5-10% nitrogen and 30-60% crude protein. In a preferred embodiment, the dietary supplement composition comprises, on a dry matter basis, 6.5-7.8% nitrogen and 40-50%% crude protein. In a further preferred embodiment, the dietary supplement composition comprises 7% nitrogen and 45.3 % crude protein on a dry matter basis. In some embodiments, the crude protein is comprised of both soluble and insoluble fractions. For example, in some embodiments, the crude protein has 25-60% soluble and 40-75% insoluble protein. In some embodiments, the crude protein has 36-46% soluble protein and 53-63% insoluble protein. In some embodiments, the crude protein has 40-45% soluble protein and 55-60% insoluble protein. In some embodiments, the crude protein has 42% soluble protein and 58% insoluble protein. In some embodiments, the dietary supplement composition comprises, on a dry matter basis, 0.5% to 1.5% ammonia. In some embodiments, the dietary supplement composition comprises a protein component (e.g., protein extract) comprising an amino acid profile as shown in Table 1 or Table 2. In some embodiments, the amino acid profile of a protein component of a dietary supplement composition of the invention comprises a percentage of the different amino acids as shown in Table 1 or Table 2, plus or minus a certain percentage (e.g., plus or minus 1, 2, 3, 4, 5, 6, 7, 8, 9, 10 or more percent).

For comparison, the amino acid profile of a dietary supplement composition of the invention is compared to the amino acid profile of rumen bacteria (See Table 2).

**TABLE 2**

| % total AA | DEMP | Rumen bacteria[1] |
|---|---|---|
| Arg | 6.0 | 5.1 |
| His | 2.5 | 2.0 |
| Ile | 5.1 | 5.7 |
| Leu | 9.5 | 8.1 |
| **Lys** | **6.7** | **7.9** |
| **Met** | **2.1** | **2.6** |
| Phe | 5.1 | 5.1 |
| Thr | 5.3 | 5.8 |
| Trp | 1.4 | -- |
| Val | 5.8 | 6.2 |
| 1. Clark et al., 1992. | | |

In certain embodiments, a dietary supplement composition is made using a yeast extract. For example, a dried (e.g., freeze dried) yeast extract is obtained using any of the well known processes in the art. Any known yeast can be used. In addition, the yeast may be modified (e.g., genetically or by other methods). For example, the yeast may be enriched for one or more nutrients (e.g., selenium enriched (e.g., cultivated in a medium containing inorganic selenium salts)). The dried yeast extract (e.g., that may or may not be combined with other materials (e.g., vitamins, minerals, foodstuff, or other materials)) is then made (e.g. ground) into a finer particle size. Any of the well known methods of making a material (e.g., dried material) into a smaller particle size material may be used including atomization, grinding, sieving, and/or other methods of wearing down material. In a preferred embodiment, the dietary supplement composition (e.g., dried yeast or microbial extract) is ground into fine particles having a particulate size of 0.25-0.5 mm, 0.125-0.250 mm, or 0.125 mm, although larger and smaller particle sizes may also be used. The particle size of the dietary supplement composition is defined by the claims. A dietary supplement composition of the invention is added to and/or combined with any orally ingestible feed. Any animal feed blend known in the art can be used in accordance with the invention (e.g., mixed or combined with a dietary supplement composition) such as rapeseed meal, cottonseed meal, soybean meal, and cornmeal, but soybean meal and cornmeal are particularly preferred. The animal feed blend is supplemented with a dietary supplement composition of the invention, but other ingredients can optionally be added to the animal feed blend. Optional ingredients of the animal feed blend include sugars and complex carbohydrates such as both water-soluble and water-insoluble monosaccharides, disaccharides and polysaccharides. Optional amino acid ingredients that can be added to the feed blend are arginine, histidine, isoleucine, leucine, lysine, methionine, phenylalanine, threonine, tryptophan, valine, tyrosine ethyl HCl, alanine, aspartic acid, sodium glutamate, glycine, proline, serine, cysteine ethyl HCl, and analogs, and salts thereof. Vitamins that can be optionally added are thiamine HCl, riboflavin, pyridoxine HCl, niacin, niacinamide, inositol, choline chloride, calcium pantothenate, biotin, folic acid, and vitamins A, B, K, D, E, and the like. Minerals, protein ingredients, including protein obtained from meat meal or fish meal, liquid or powdered egg, fish solubles, whey protein concentrate, oils (e.g., soybean oil), cornstarch, calcium, inorganic phosphate, copper sulfate, salt, and limestone can also be added. Any medicament ingredients known in the art can be added to the animal feed blend such as antibiotics.

In some embodiments, an animal feed comprises one or more of the following: Alfalfa (lucerne), Barley, Birdsfoot trefoil, Brassicas (e.g., Chau moellier, Kale, Rapeseed (Canola), Rutabaga (swede), Turnip), Clover (e.g., Alsike clover, Red clover, Subterranean clover, White clover), Grass (e.g., False oat grass, Fescue, Bermuda grass, Brome, Heath grass. Meadow grasses (from naturally mixed grassland swards), Orchard grass, Ryegrass, Timothy-grass), Corn (maize), Millet, Oats, Sorghum, Soybeans, Trees (pollard tree shoots for "treehay"), and Wheat.

Compositions of the invention may comprise one or more inert ingredients (e.g., if it is desirable to limit the number of calories added to the diet by the dietary supplement) when fed to the animals. For example, a dietary supplement composition and/or animal feeds or foodstuffs to which the dietary supplement composition of the invention is added may also contain optional ingredients including, for example, herbs, vitamins, minerals, enhancers, colorants, sweeteners, flavorants, inert ingredients, dehydroepiandosterone (DHEA), Fo-Ti or Ho Shu Wu (herb common to traditional Asian treatments), Cat's Claw (ancient herbal ingredient), green tea (polyphenols), inositol, kelp, dulse, bioflavinoids, maltodextrin, nettles, niacin, niacinamide, rosemary, selenium, silica (silicon dioxide, silica gel, horsetail, shavegrass), spirulina, and zinc. Such optional ingredients may be either naturally occurring or concentrated forms.

In some embodiments, a dietary supplement composition of the invention is mixed with and/or combined with other foodstuffs (e.g., to generate an animal feed) including calcium phosphate or acetate, tribasic; potassium phosphate, dibasic; magnesium sulfate or oxide; salt (sodium chloride); potassium chloride or acetate; ferric orthophosphate; niacinamide; zinc sulfate or oxide; calcium pantothenate; copper gluconate; riboflavin; beta-carotene; pyridoxine hydrochloride; thiamin mononitrate; folic acid; biotin; chromium chloride or picolonate; potassium iodide; sodium selenate; sodium molybdate; phylloquinone; vitamin D3; cyanocobalamin; sodium selenite; copper sulfate; vitamin A; inositol; potassium iodide. Suitable dosages for vitamins and minerals may be obtained, for example, by consulting the U.S. RDA guidelines.

In further embodiments, a dietary supplement composition of the invention or other foodstuff to which a dietary supplement composition is added to and/or combined with (e.g., to generate an animal feed) may include one or more food flavorings such as acetaldehyde (ethanal), acetoin (acetyl methylcarbinol), anethole (parapropenyl anisole), benzaldehyde (benzoic aldehyde), N butyric acid (butanoic acid), d or 1 carvone (carvol), cinnamaldehyde (cinnamic aldehyde), citral (2,6 dimethyloctadien 2,6 al 8, gera nial, neral), decanal (N decylaldehyde, capraldehyde, capric aldehyde, caprinaldehyde, aldehyde C 10), ethyl acetate, ethyl butyrate, 3 methyl 3 phenyl glycidic acid ethyl ester (ethyl methyl phenyl glycidate, strawberry aldehyde, C16 aldehyde), ethyl vanillin, geraniol (3,7 dimethyl 2,6 and 3,6 octadien 1 ol), geranyl acetate (geraniol acetate), limonene (d,1, and dl), linalool (linalol, 3,7 dimethyl 1,6 octadien 3 ol), linalyl acetate (bergamol), methyl anthranilate (methyl 2 aminobenzoate), piperonal (3,4 methylenedioxy benzaldehyde, heliotropin), vanillin, alfalfa (*Medicago sativa* L.), allspice (*Pimenta officinalis*), ambrette seed (*Hibiscus abelmoschus*), angelic (*Angelica archangelica*), Angostura (*Galipea officinalis*), anise (*Pimpinella anisum*), star anise (*Illicium verum*), balm (*Melissa officinalis*), basil (*Ocimum basilicum),* bay (*Laurus nobilis*), calendula (*Calendula officinalis*), (*Anthemis nobilis*), capsicum (*Capsicum frutescens*), caraway (*Carum carvi*), cardamom (*Elettaria cardamomum*), cassia (*Cinnamomum cassia*), cayenne pepper (*Capsicum frutescens*), Celery seed (*Apium graveolens*), chervil (*Anthriscus cerefolium*), chives (*Allium schoenoprasum*), coriander (*Coriandrum sativum*), cumin (*Cuminum cyminum*), elder flowers (*Sambucus canadensis*), fennel (*Foeniculum vulgare*), fenugreek (*Trigonella foenum graecum*), ginger (*Zingiber officinale*), horehound (*Marrubium vulgare*), horseradish (*Armoracia lapathifolia*), hyssop (*Hyssopus officinalis*), lavender (*Lavandula officinalis*), mace (*Myristica fragrans*), marjoram (*Majorana hortensis*), mustard (*Brassica nigra, Brassica juncea, Brassica hirta*), nutmeg (*Myristica fragrans*), paprika (*Capsicum annuum*), black pepper (*Piper nigrum*), peppermint (*Mentha piperita*), poppy seed (*Papayer somniferum*), rosemary (*Rosmarinus officinalis*), saffron (*Crocus sativus*), sage (*Salvia officinalis*), savory (*Satureia hortensis, Satureia montana*), sesame (*Sesamum indicum*), spearmint (*Mentha spicata*), tarragon (*Artemisia dracunculus*), thyme (*Thymus vulgaris, Thymus serpyllum*), turmeric (*Curcuma longa*), vanilla (*Vanilla planifolia*), zedoary (*Curcuma zedoaria*), sucrose, glucose, saccharin, sorbitol, mannitol, aspartame. Other suitable flavoring are disclosed in such references as Remington's Pharmaceutical Sciences, 18th Edition, Mack Publishing, p. 1288-1300 (1990), and Furia and Pellanca, Fenaroli's Handbook of Flavor Ingredients, The Chemical Rubber Company, Cleveland, Ohio, (1971), known to those skilled in the art.

In other embodiments, the compositions comprise at least one synthetic or natural food coloring (e.g.,

annatto extract, astaxanthin, beet powder, ultramarine blue, canthaxanthin, caramel, carotenal, beta carotene, carmine, toasted cottonseed flour, ferrous gluconate, ferrous lactate, grape color extract, grape skin extract, iron oxide, fruit juice, vegetable juice, dried, tagening meal, carrot oil, corn endosperm oil, paprika, paprika oleoresin, riboflavin, saffron, tumeric, tumeric and oleoresin).

In still further embodiments, the compositions comprise at least one phytonutrient (e.g., soy isoflavonoids, oligomeric proanthcyanidins, indol 3 carbinol, sulforaphone, fibrous ligands, plant phytosterols, ferulic acid, anthocyanocides, triterpenes, omega 3/6 fatty acids, conjugated fatty acids such as conjugated linoleic acid and conjugated linolenic acid, polyacetylene, quinones, terpenes, cathechins, gallates, and quercitin). Sources of plant phytonutrients include soy lecithin, soy isoflavones, brown rice germ, royal jelly, bee propolis, acerola berry juice powder, Japanese green tea, grape seed extract, grape skin extract, carrot juice, bilberry, flaxseed meal, bee pollen, ginkgo biloba, primrose (evening primrose oil), red clover, burdock root, dandelion, parsley, rose hips, milk thistle, ginger, Siberian ginseng, rosemary, curcumin, garlic, lycopene, grapefruit seed extract, spinach, and broccoli.

In still other embodiments, the compositions comprise at least one vitamin (e.g., vitamin A, thiamin (B1), riboflavin (B2), pyridoxine (B6), cyanocobalamin (B12), biotin, retinoic acid (vitamin D), vitamin E, folic acid and other folates, vitamin K, niacin, and pantothenic acid). In some embodiments, a feed (e.g., comprising a dietary supplement composition) comprises at least one mineral (e.g., sodium, potassium, magnesium, calcium, phosphorus, chlorine, iron, zinc, manganese, flourine, copper, molybdenum, chromium, and iodine). In some particularly preferred embodiments, a feed (e.g., comprising a dietary supplement composition) comprises vitamins or minerals in the range of the recommended daily allowance (RDA) as specified by the United States Department of Agriculture. In still other embodiments, the particles comprise an amino acid supplement formula in which at least one amino acid is included (e.g., 1-carnitine or tryptophan).

In some embodiments, the feed compositions contain supplemental enzymes. Exemplary of such enzymes are proteases, cellulases, xylanases, phytase and acid phosphatases. Enzymes may be provided in purified form, partially purified form, or crude form. Enzyme sources may be nature (e.g., fungal) or synthetic or produced *in vitro* (e.g., recombinant). In some embodiments, a protease (e.g., pepsin) is added.

In some embodiments, antioxidants can also be added to the foodstuff, such as an animal feed composition. Oxidation can be prevented by the introduction of naturally-occurring antioxidants, such as beta-carotene, , vitamin C, and or of synthetic antioxidants such as butylated hydroxytoluene, butylated hydroxyanisole, tertiary-butylhydroquinone, propyl gallate or ethoxyquin to the foodstuff. Compounds which act synergistically with antioxidants can also be added such as ascorbic acid, citric acid, and phosphoric acid. The amount of antioxidants incorporated in this manner depends on requirements such as product formulation, shipping conditions, packaging methods, and desired shelf-life.

The resultant dietary supplement composition (e.g., comprising fine particles of yeast or microbial extract (optionally mixed with other components such as vitamins, minerals, etc.)) is fed to animals (e.g. ruminants (e.g., in order to enhance milk production and/or alter milk content (e.g., increase milk fat)).

In some embodiments, the invention provides a method of raising livestock (e.g., ruminants) on a nutritionally balanced diet comprising providing livestock and an animal feed composition containing a dietary supplement composition described herein and administering the animal feed composition to the livestock under conditions such that livestock characteristics (e.g., milk production and quality characteristics) are attained (e.g., such that the milk quality and or amount produced is superior to that obtained in a control subject not administered the dietary supplement composition).

## EXAMPLES

The following examples serve to illustrate certain embodiments and aspects of the invention.

## EXAMPLE 1

**Administration of a dietary supplement composition to dairy cows and its effect on milk production, food intake, and blood metabolites, Canadian dairy farms**

Three dairy farms located in Ontario and Quebec provinces in eastern Canada were utilized to determine the effects of feeding a dietary supplement composition to dairy cows. A dietary supplement composition was generated by drying yeast extract derived from *Saccharomyces cerevisiae* using a spray dryer (atomizer). The dried extract had 47 % protein (40% soluble) on a dry matter basis. Table 1 describes properties of the dietary supplement composition. The particle size of the dietary supplement composition was between 0.100 - 0.250 mm in size, and was administered to dairy cows as described below. The cows were monitored and characterized for milk production, milk components, and blood metabolites.

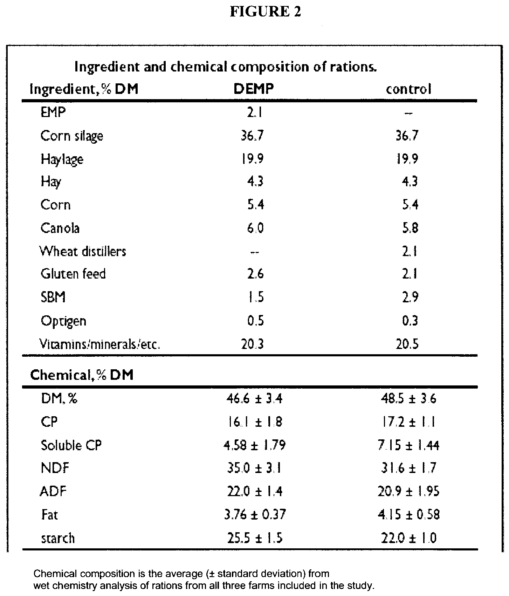

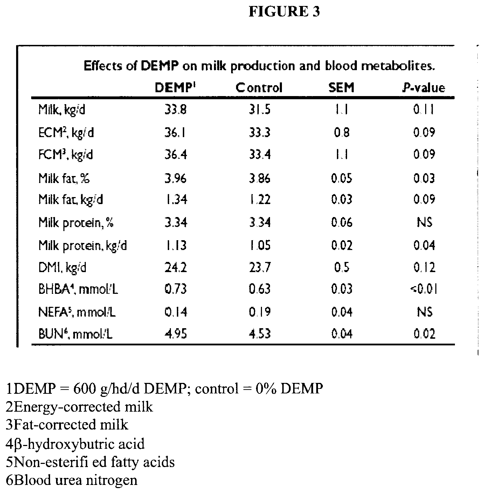

The study was conducted as a cross-over design with two 21 day periods. Experimental rations were: 1) control, 0 g/d dietary supplement composition; or 2) 600 g/d dietary supplement composition. Diets were isonitrogenous and isoenergetic and formulated to provide 600 g/hd/d dietary supplement composition (2.1 % ration dry matter). The rations are shown in Figure 2. A portion of plant-based protein was replaced with dietary supplement composition. Each farm was assigned to one of two treatment sequences: control followed by dietary supplement composition or dietary supplement composition followed by control. Milk production and feed intake was recorded for the last 2 days of each period, and blood samples were taken from 15 randomly selected cows from each farm during the last week of each period. Milk was analyzed for fat and protein and blood was analyzed for non-esterified fatty acids (NEFA), β-hydroxybutyric acid (BHBA), and blood urea nitrogen (BUN) (See Figure 3). Energy-corrected milk was greater (P = 0.09) for dietary supplement composition than control (36.1 vs. 33.3 $\pm$ 0.8 kg/d) while dry matter intake was not different, averaging 24.0 $\pm$ 0.5 kg/d. Milk fat content (3.96 vs. 3.86 $\pm$ 0.05 %, P = 0.03) and fat yield (1.34 vs. 1.22 $\pm$ 0.03 kg/d, P= 0.09) was higher for dietary supplement composition than control. Milk protein content was not different between treatments, averaging 3.34 $\pm$ 0.06%, but protein yield was greater (P= 0.04) for dietary supplement composition fed animals than control animals (1.13 vs. 1.05 $\pm$ 0.02 kg/d). While BHBA and NEFA were not different between treatments, averaging 0.68 $\pm$ 0.03 mmol/L for BHBA and 0.17 $\pm$ 0.04 mmol/L for NEFA, BUN was greater (P = 0.02) for dietary supplement composition than control (4.95 vs. 4.53 $\pm$ 0.04 mmol/L).

Thus, in some embodiments, the invention provides that including dietary supplement composition in a ration at 600 g/d increased energy-corrected milk (e.g., by 2.8 kg/d) and increased both milk fat and protein secretion (e.g., by 0.12 kg/d), while not affecting dry matter intake. Blood metabolites BHBA and NEFA were not affected by the dietary supplement composition, indicating that the increase in production and components was not due to mobilization of body reserves.

## EXAMPLE 2

**Administration of a dietary supplement composition to dairy cows and its effect on milk production, food intake, and blood metabolites, South Dakota State University**

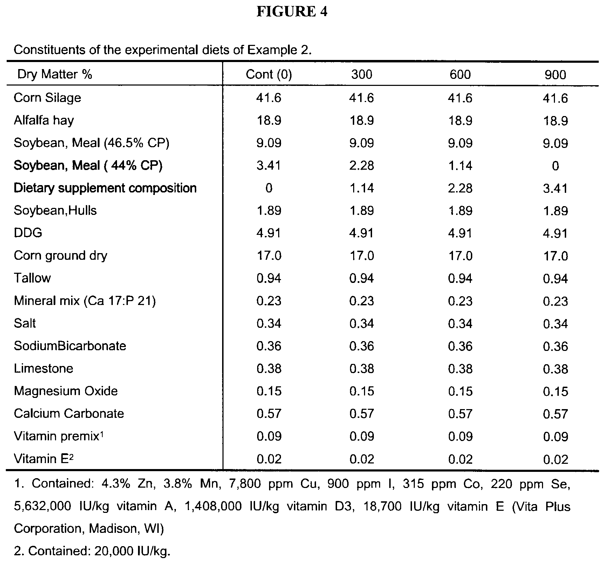

Experiments were conducted to determine the effect of a dietary supplement composition on food intake, milk production and milk components. Table 1 describes properties of the dietary supplement composition. The particle size of the dietary supplement composition was between 0.100 - 0.250 mm in size. Experiments were conducted at the Dairy Research and Training Facility at South Dakota State University (Brookings), and all procedures were approved by the South Dakota Institutional Animal Care and Use Committee. Sixteen Holstein lactating dairy cows (eight multiparous and four primiparous) with 93 $\pm$ 37 DIM were used in a 4 x 4 Latin square design with four 28 day periods. Cows were blocked by parity and production; one square contained 4 fistulated animals. Basal diets contained 40% of corn silage, 20% of alfalfa hay, and 40% of concentrate mix (See Figure 4), and were formulated for 16.1% of crude protein, and 1.58 Mcal/kg of net energy of lactation.

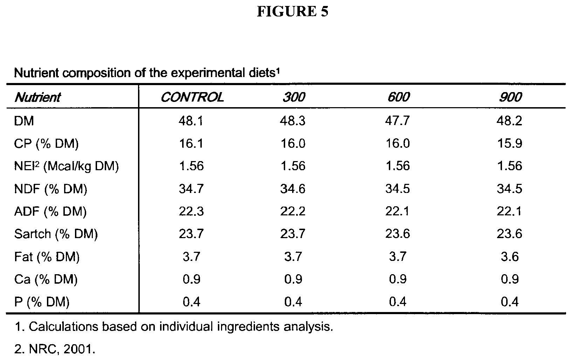

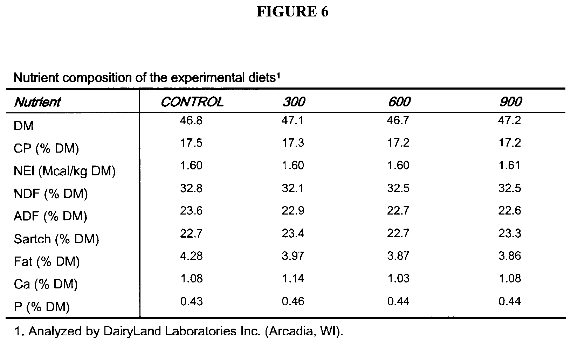

Figure 5 shows the nutrient composition of the experimental diets used based on individual ingredient analyses done by DairyLand Laboratories Inc. (Arcadia, WI). Figure 6 shows the total mixed rations (TMR) analyzed by DairyLand Laboratories Inc. (Arcadia, WI). During each period, cows were fed one of 4 treatments: control (0 g/hd/d dietary supplement composition), 300 (300 g/hd/d dietary supplement composition), 600 (600 g/hd/d dietary supplement composition), and 900 (900 g/hd/d dietary supplement composition). Dietary supplement composition replaced customized soybean meal (44% crude protein (CP)) to result in isonitrogenous and isoenergetic diets.

Forages were premixed in a vertical mixer and blended with concentrates in a Calan Data Ranger (American Calan Inc., Northwood, NH). Cows were individually fed for ad libitum intake once daily (0900 h) using Calan Broadbent individual animal feeders (American Calan, Inc., Northwood, NH). Orts were weighed once daily and diet offered was adjusted to ensure 10% feed refusal. Weeks 1 and 2 of each period were used for adjustment to diets, and wk 3 and 4 for data collection.

Cows had unlimited access to water and feed during the day except when they were milked. All the cows received a rbST shot (Posilac; Monsanto, St. Louis, MO) every 14 days according to normal farm protocol.

Measurements and Sampling.

Feed intakes and orts for individual cows were recorded daily using a Calan Data Ranger (American Calan Inc.) The dry matter (DM) percentage of the corn silage and the alfalfa hay was determined weekly, and the diets were adjusted in order to maintain the same forage to concentrate ratio during the experiment. Samples of alfalfa hay, corn silage, concentrate mix, dietary supplement composition (DEMP), soybean meal, and total mixed ration (TMR) of each treatment were collected on three consecutive days during wk 4 of each period, frozen and stored at -20°C until analysis. Additional TMR samples were taken on the forth week for analysis using a particle separator (Penn State Particle Separator procedure).

Ruminal fluid was sampled from the fistulated cows on the forth week of each period in 9 time points, before feeding, and 2, 4, 6, 8, 10, 12, 16, 24 h after feeding. pH was measured immediately after the samples were taken, and 10 ml aliquots of rumen fluid were placed in scintillation vials, one containing 50% (vol/vol) sulfuric acid and another containing 25% (wt/vol) metaphosphoric acid. Samples were frozen and stored at -20°C for additional ammonia and VFA analysis.

Blood was collected by venipuncture of the tail vein approximately 3 hours after feeding on two consecutive days during wk 4 of the each period. Blood was drawn into 10-ml evacuated tubes containing $K_3$-EDTA anticoagulant (BectonDickinson and Co., Rutherford, NJ).

Cows were milked 3 times a day (0600, 1400, and 2100 h) in a double-8 parallel milking parlor equipped with automatic cow identification, individual production recording, and automated detacher milker units. Milk of individual cows was sampled at each milking on 2 consecutive days on weeks 3 and 4 for milk composition analysis, and an additional sample was taken 1 day on week 3 and 4 for fatty acid analysis.

Body weights (BW) were recorded on 3 consecutive days at the start of the experiment and at the end of each period. Body condition was scored (BCS) by 3 separate individuals in a 1 to 5 scale (See, e.g., Wildman et al., 1982) at the beginning of the experiment and at the end of each period.

Laboratory Analyses.

All feed and TMR samples were made into composites by period and dried at 55°C in a Despatch oven (style V-23; DespatchOven Co., Minneapolis, MN) for 48 h and ground through a 4-mm screen of a Wiley mill (model 3; Arthur H. Thomas Co., Philadelphia, PA), and then further ground through a 1-mm screen (Brinkman ultracentrifuge mill, Brinkman Industries Co., Westbury, NY). Subsamples of feed composites were dried at 105°C for 3 h to DM determination (Shreve, 2006). Composites of corn silage, alfalfa hay, DEMP, concentrate mix, customized soybean meal, and TMRs, dried at 55°C, were sent to DairyLand Laboratories Inc. (Arcadia, WI) for composition analysis by wet chemistry. The particle size distribution of the diets was determined by the 4-screen Pen State Particle Size Separator (PSPS; See, e.g., Kononoff et al., 2003).

Milk samples were sent to Heart of America DHIA Laboratory (Manhattan, KS) for milk composition analysis. Butter fat, milk protein, lactose and solid non fat (SNF) were analyzed with mid-infrared spectroscopy (Bentley 2000 Infrared Milk Analyzer, Bentley Instruments, Chaska, MN); somatic cells were counted by laser technology (Soma Count 500, Bentley Instruments, Chaska, MN), and milk urea nitrogen (MUN) was determined using chemical methodology based on a modified Berthelot reaction (ChemSpec 150 Analyzer, Bentley Instruments). Milk composites were frozen and analyzed for fatty acid composition.

Plasma was collected after centrifuging blood samples at 2000 rpm for 20 min at 5 °C (CR412 centrifuge; Jouan Inc., Winchester, VA) and frozen until analysis. Plasma glucose was determined by glucose oxidase reaction (See, e.g., Trinder, 1969) with glucose kit (glucose kit, code 439-90901, Wako Chemicals USA, Inc, Richmond, VA). β-hydroxybutirate (BHBA) concentration in plasma was determined with BHBA kit (BHBA kit, Cat. No 2440-058, Stanbio Laboratory, Boerne, TX) according to described methods (See e.g., Williamson, 1962). All ketone bodies (acetone, acetoacetate and BHBA) can be measured in plasma, but BHBA is considered the most robust and applicable indicator because acetone is extremely volatile compound and acetoacetate is an unstable compound that forms acetone spontaneously (See e.g., Nielsen et al., 2005). Plasma was analyzed for non-esterified fatty acids (NEFA) using a NEFA kit (NEFA kit, code 434-91795, Wako Chemicals USA, Inc, Richmond, VA) following the specifications of Johnson and Peters (See, e.g., Johnson and Peters, 1993). Blood glucose, NEFA and BHBA kits preparations were read in a microplate reader (Cary 50 MPR, Varian Inc., Lake Forest, CA).

Rumen samples conserved with metaphosphoric acid were centrifuged at 12,500 x g for 15 min at 4 °C (Accuspin Micro 17R, Fisher Scientific Inc., Denver CO), sub-samples of the centrifuged rumen fluid were sent to Alltech Laboratories (Alltech, Nicholasville, KY) for volatile fatty acids (VFA) analysis. Gas chromatography (HP Agilent 6890 GC, Hewlett Packard, Palo Alto, CA) was used to analyze VFA as described (See, e.g., Erwin et al., 1961) using Chromosorb WAW in a 6ft x 4mm glass column (Supelco, Inc., Bellefonte, PA). Nitrogen ammonia concentration and nitrogen fractionations were determined in the rumen samples conserved with sulfuric acid. Rumen sub-samples were centrifuged and analyzed for nitrogen ammonia concentration as described (See, e.g., Weatherburn, 1967). Rumen nitrogen fractionation were determined following a described procedure (See, e.g., Reynal et al., 2007).

Data analyses.

The experimental design was a 4 x 4 Latin square with 28 day periods. All data were analyzed by the MIXED procedure in SAS (See SAS, 2001). Weekly means of DMI and milk yield during the final 2 wk of each period were used for statistical analysis. Means were also calculated for data collected for milk composition on d 18, 19, 25 and 26, on d 25 and 26 for blood samples, and on d 25, 26 and 28 for BCS and BW. These data were analyzed using the following fitted model:

$$Y_{ijkl} = \mu + T_i + P_j + C_{k(Sl)} + S_l + \varepsilon_{ijkl},$$

where $Y_{ijkl}$ is the dependent variable, $\mu$ is the overall mean, $T_i$ is the effect of treatment i (i = 1 to 4), $P_j$ is the effect of period j (j = 1 to 4), $C_{k(Sl)}$: effect of cow k (k = 1 to 4) nested with square l, $S_l$ is the effect of square l (1= 1 to 4), and $\varepsilon_{ijkl}$ is the residual error. The experimental design used cow as the experimental unit and cow (square) as the random variable.

Nitrogen fraction calculation means were obtained from the 9 time points sample collection on d 27, and were analyzed using the fitted model:

$$Y_{ijk} = \mu + T_i + P_j + C_k + \varepsilon_{ijk},$$

where $Y_{ijk}$ is the dependent variable, $\mu$ is the overall mean, $T_i$ is the effect of treatment i (i = 1 to 4), $P_j$ is the effect of period j (j = 1 to 4), $C_k$ is the effect of cow k (k = 1 to 4), and $\varepsilon_{ijk}$ is the residual error. All terms were considered fixed except for cow ($C_k$) that was considered as the random variable.

Repeated measures model was used to evaluate ruminal parameters (pH, NH3 and VFA):

$$Y_{ijm} = \mu + T_i + P_j + \varepsilon_{ij} + H_m + HT_{mi} + \omega_{ijm},$$

where $Y_{ijm}$ is the dependent variable, $\mu$ is the overall mean, $T_i$ is the effect of treatment i (i = 1 to 4), $P_j$ is the effect of period j (j = 1 to 4), $\varepsilon_{ij}$ is the whole plot error, $H_m$ is the effect of time m (m = 1 to 9), is the interaction between time m and treatment i, and $\omega_{ijm}$ is the subplot error. The covariance structure corresponded to the lowest value according to the Akaike's information criterion being selected (See Littell, 2006).

Polynomial orthogonal contrasts were used to test the linear, quadratic, and cubic effects of increasing inclusion of DEMP in the diets. Interactions that were deemed insignificant were removed from the models. Significance was declared at $P \leq 0.05$, and tendencies were discussed at $0.05 \leq P \leq 0.10$.

Results

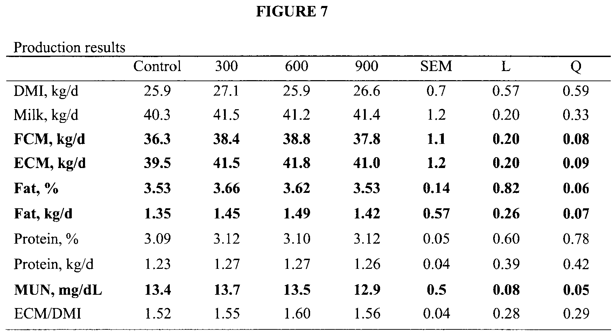

The results of feeding the experimental diets to dairy cows are shown in Figure 7. As indicated in Figure 7, energy- corrected and fat-corrected milk was greater for treatments containing the dietary supplement composition than with control treatments lacking the dietary supplement composition. Treatments with 300 and 600 g dietary supplement composition increased the FCM by 2.1 and 2.5 kg, respectively, compared to control.

Milk fat concentration and yield were also greater for dietary supplement composition treatments than control. The 300 and 600 g dietary supplement composition treatments increased milk fat yield 0.10 and 0.14 kg, respectively, compared to controls. The best production responses were associated with treatments with dietary supplement composition at 300 and 600 g.

**Claims**

1. A protein rich ruminant dietary supplement composition comprising 5-10% nitrogen, 30-60% crude protein, and 0.5% to 1.5% ammonia on a dry matter basis, wherein said composition is made up of dried particles of 0.100-0.500 mm in size, preferably 0.100-0.250 mm in size, wherein said composition is free of a protective barrier derived from physical or chemical treatment of the composition, and wherein said crude protein is derived from a source selected from the group consisting of whole yeast, yeast extract, algae and bacteria.

2. The dietary supplement composition of claim 1, wherein said composition comprises 6.5-7.8 % nitrogen and 40-50 % crude protein on a dry matter basis, preferably 7 % nitrogen and 45 % crude protein on a dry matter basis.

3. The dietary supplement composition of claim 1, wherein said crude protein comprises soluble and insoluble fractions, preferably 40-45% soluble protein and 55-60% insoluble protein.

4. The dietary supplement composition of claim 1, wherein said crude protein is derived from Saccharomyces.

5. The dietary supplement composition of claim 1, wherein the crude protein is dried and subsequently ground or sieved.

6. A method of making the composition of claim 1, comprising drying said crude protein using an atomizer.

7. A method of increasing intestinally absorbed protein in a ruminant comprising providing a ruminant with a dietary supplement composition comprising 6.5-7.8% nitrogen, 40-50 % crude protein, and 0.5% to 1.5% ammonia on a dry matter basis, wherein said composition is made up of dried particles of 0.100-0.500 mm in size, wherein said composition is free of a protective barrier derived from physical or chemical treatment of the composition, and wherein said crude protein is derived from a source selected from the group consisting of whole yeast, yeast extract, algae and bacteria.

8. A method of increasing milk production in a ruminant comprising providing a ruminant with a dietary supplement composition comprising 6.5-7.8% nitrogen, 40-50 % crude protein, and 0.5% to 5% ammonia on a dry matter basis, wherein said composition is made up of dried particles of 0.100-0.500 mm in size, wherein said composition is free of a protective barrier derived from physical or chemical treatment of the composition, and wherein said crude protein is derived from a source selected from the group consisting of whole yeast, yeast extract, algae and bacteria.

9. The method of claim 8, wherein increasing milk production comprises the production of milk that contains increased milk fat content and/or increased protein secretion content compared to milk produced from a ruminant not fed a dietary supplement composition of the invention.

**10.** The method of claim 8, wherein the dietary supplement composition is administered to the ruminant to provide 1.5%-2.5% of the ruminant's total daily dry matter intake.

**11.** The method of claim 8, wherein the dietary supplement composition is added to a standard ruminant feed.

**12.** The method of claim 8, wherein the dietary supplement composition allows amino acids and/or proteins to escape ruminal fermentation in the rumen in a greater amount compared to the amount of amino acids and/or protein that escape ruminal fermentation in a rumen of a ruminant not fed the dietary supplement composition.

**13.** A method of manufacturing a ruminant feed comprising combining a standard ruminant feed and a dietary supplement composition according to claim 1.


**Patentansprüche**

**1.** Proteinreiche Nahrungsergänzungszusammensetzung für Wiederkäuer, umfassend 5 bis 10% Stickstoff, 30 bis 60% Rohprotein und 0,5% bis 1,5% Ammoniak auf einer Trockensubstanzbasis, wobei die genannte Zusammensetzung aus getrockneten Partikeln von 0,100 bis 0,500 mm Größe gebildet ist, vorzugsweise 0,100 bis 0,250 mm Größe, wobei die genannte Zusammensetzung frei von einer Schutzbarriere ist, die von physikalischer oder chemischer Behandlung der Zusammensetzung stammt und wobei das genannte Rohprotein von einer Quelle ausgewählt aus der Gruppe bestehend aus Vollhefe, Hefeextrakt, Algen und Bakterien stammt.

**2.** Nahrungsergänzungszusammensetzung nach Anspruch 1, wobei die genannte Zusammensetzung 6,5 bis 7,8% Stickstoff und 40 bis 50% Rohprotein auf einer Trockensubstanzbasis umfasst, vorzugsweise 7% Stickstoff und 45% Rohprotein auf einer Trockensubstanzbasis.

**3.** Nahrungsergänzungszusammensetzung nach Anspruch 1, wobei das genannte Rohprotein lösliche und unlösliche Fraktionen umfasst, vorzugsweise 40 bis 45% lösliches Protein und 55 bis 60% unlösliches Protein.

**4.** Nahrungsergänzungszusammensetzung nach Anspruch 1, wobei das genannte Rohprotein von Saccharomyces stammt.

**5.** Nahrungsergänzungszusammensetzung nach Anspruch 1, wobei das Rohprotein getrocknet und anschließend gemahlen oder gesiebt wird.

**6.** Verfahren zum Herstellen der Zusammensetzung nach Anspruch 1, umfassend Trocknen des genannten Rohproteins unter Verwenden eines Zerstäubers.

**7.** Verfahren zum Erhöhen von intestinal absorbierten Protein in einem Wiederkäuer, umfassend Versorgen eines Wiederkäuers mit einer Nahrungsergänzungszusammensetzung umfassend 6,5 bis 7,8% Stickstoff, 40 bis 50% Rohprotein und 0,5% bis 1,5% Ammoniak auf einer Trockensubstanzbasis, wobei die genannte Zusammensetzung aus getrockneten Teilchen von 0,100 bis 0,500 mm Größe gebildet ist, wobei die genannte Zusammensetzung frei von einer Schutzbarriere ist, die von physikalischer oder chemischer Behandlung der Zusammensetzung stammt und wobei das genannte Rohprotein von einer Quelle ausgewählt aus der Gruppe bestehend aus Vollhefe, Hefeextrakt, Algen und Bakterien stammt.

**8.** Verfahren zum Erhöhen der Milchproduktion in einem Wiederkäuer, umfassend Versorgen eines Wiederkäuers mit einer Nahrungsergänzungszusammensetzung umfassend 6,5 bis 7,8% Stickstoff, 40 bis 50% Rohprotein und 0,5% bis 5% Ammoniak auf einer Trockensubstanzbasis, wobei die genannte Zusammensetzung aus getrockneten Teilchen von 0,100 bis 0,500 mm Größe gebildet ist, wobei die genannte Zusammensetzung frei von einer Schutzbarriere ist, die von physikalischer oder chemischer Behandlung der Zusammensetzung stammt und wobei das genannte Rohprotein aus einer Quelle ausgewählt aus der Gruppe bestehend aus Vollhefe, Hefeextrakt, Algen und Bakterien stammt.

**9.** Verfahren nach Anspruch 8, wobei das Erhöhen der Milchproduktion die Produktion von Milch, die ein erhöhten Milchfettgehalt und/oder erhöhten Proteinsekretionsgehalt enthält, umfasst, verglichen mit Milch, produziert von einem Wiederkäuer, dem die Nahrungsergänzungszusammensetzung der Erfindung nicht gefüttert wurde.

**10.** Verfahren nach Anspruch 8, wobei die Nahrungsergänzungszusammensetzung dem Wiederkäuer verabreicht wird, um 1,5% bis 2,5% der gesamten täglichen Trockensubstanzaufnahme des Wiederkäuers zu stellen.

**11.** Verfahren nach Anspruch 8, wobei die Nahrungsergänzungszusammensetzung einem üblichen Wiederkäuerfutter zugesetzt wird.

**12.** Verfahren nach Anspruch 8, wobei die Nahrungsergänzungszusammensetzung ermöglicht, dass Aminosäuren und/oder Proteine der ruminalen Fermentation im Pansen in einer größeren Menge entgehen, verglichen zu der Menge von Aminosäuren und/oder Proteinen, die der ruminalen Fermentation im Pansen von einem Wiederkäuer, dem die Nahrungsergänzungszusammensetzung nicht gefüttert wurde, entgehen.

13. Verfahren zum Herstellen eines Wiederkäuerfutters, umfassend das Kombinieren eines üblichen Wiederkäuerfutters und einer Nahrungsergänzungszusammensetzung nach Anspruch 1.

**Revendications**

1. Composition complément alimentaire riche en protéine destinée aux ruminants comprenant de 5 à 10 % d'azote, de 30 à 60 % de protéine brute, et de 0,5 % à 1,5 % d'ammoniac sur une base de matière sèche, ladite composition étant constituée de particules sèches de 0,100 à 0,500 mm de taille, préférablement de 0,100 à 0,250 mm de taille, ladite composition étant exempte de barrière protectrice provenant du traitement physique ou chimique de la composition, et ladite protéine brute provenant d'une source sélectionnée dans le groupe constitué de la levure complète, d'un extrait de levure, des algues et des bactéries.

2. Composition complément alimentaire selon la revendication 1, ladite composition comprenant de 6,5 à 7,8 % d'azote et de 40 à 50 % de protéine brute sur une base de matière sèche, préférablement 7 % d'azote et 45 % de protéine brute sur une base de matière sèche.

3. Composition complément alimentaire selon la revendication 1, ladite protéine brute comprenant des fractions solubles et insolubles, préférablement de 40 à 45 % de protéine soluble et de 55 à 60 % de protéine insoluble.

4. Composition complément alimentaire selon la revendication 1, ladite protéine brute étant dérivée de *Saccharomyces.*

5. Composition complément alimentaire selon la revendication 1, la protéine brute étant séchée et par la suite broyée ou tamisée.

6. Procédé de fabrication de la composition selon la revendication 1, comprenant le séchage de ladite protéine brute en utilisant un atomiseur.

7. Procédé d'augmentation de la protéine absorbée par voie intestinale chez un ruminant comprenant le fait de fournir à un ruminant une composition complément alimentaire comprenant de 6,5 à 7,8 % d'azote, de 40 à 50 % de protéine brute, et de 0,5 % à 1,5 % d'ammoniac sur une base de matière sèche, ladite composition étant constituée de particules sèches de 0,100 à 0,500 mm de taille, ladite composition étant exempte de barrière protectrice provenant du traitement physique ou chimique de la composition, et ladite protéine brute provenant d'une source sélectionnée dans le groupe constitué de la levure complète, d'un extrait de levure, des algues et des bactéries.

8. Procédé d'augmentation de la production de lait chez un ruminant comprenant le fait de fournir à un ruminant une composition complément alimentaire comprenant de 6,5 à 7,8 % d'azote, de 40 à 50 % de protéine brute, et de 0,5 % à 5 % d'ammoniac sur une base de matière sèche, ladite composition étant constituée de particules sèches de 0,100 à 0,500 mm de taille, ladite composition étant exempte de barrière protectrice provenant du traitement physique ou chimique de la composition, et ladite protéine brute provenant d'une source sélectionnée dans le groupe constitué de la levure complète, d'un extrait de levure, des algues et des bactéries.

9. Procédé selon la revendication 8, l'augmentation de la production de lait comprenant la production de lait qui contient une teneur accrue en matière grasse du lait et/ou une teneur accrue en sécrétion protéique comparée au lait produit par un ruminant n'ayant pas été nourri de la composition complément alimentaire de l'invention.

10. Procédé selon la revendication 8, la composition complément alimentaire étant administrée au ruminant pour fournir de 1,5 % à 2,5 % de l'apport journalier total en matière sèche au ruminant.

11. Procédé selon la revendication 8, la composition complément alimentaire étant ajoutée à un aliment standard pour ruminant.

12. Procédé selon la revendication 8, la composition complément alimentaire permettant aux acides aminés et/ou aux protéines d'échapper à la fermentation de rumination dans le rumen en une quantité supérieure comparée à la quantité des acides aminés et/ou des protéines qui échappent à la fermentation de rumination dans un rumen d'un ruminant non nourri de la composition complément alimentaire.

13. Procédé de fabrication d'un aliment pour ruminant comprenant la combinaison d'un aliment standard pour ruminant et d'une composition complément alimentaire selon la revendication 1.

FIGURE 1

Dietary Supplement Composition

RUMEN

fast liquid outflow rate

relatively low degradation rate

Dietary supplement composition provides high quality amino acids and protein to the intestine

Properties of dietary supplement composition (e.g., size) allow composition to escape rumen fermentation and flow with the liquid fraction post-ruminally

**FIGURE 2**

| Ingredient and chemical composition of rations. | | |
|---|---|---|
| Ingredient,% DM | DEMP | control |
| EMP | 2.1 | -- |
| Corn silage | 36.7 | 36.7 |
| Haylage | 19.9 | 19.9 |
| Hay | 4.3 | 4.3 |
| Corn | 5.4 | 5.4 |
| Canola | 6.0 | 5.8 |
| Wheat distillers | -- | 2.1 |
| Gluten feed | 2.6 | 2.1 |
| SBM | 1.5 | 2.9 |
| Optigen | 0.5 | 0.3 |
| Vitamins/minerals/etc. | 20.3 | 20.5 |
| **Chemical,% DM** | | |
| DM,% | 46.6 ± 3.4 | 48.5 ± 3.6 |
| CP | 16.1 ± 1.8 | 17.2 ± 1.1 |
| Soluble CP | 4.58 ± 1.79 | 7.15 ± 1.44 |
| NDF | 35.0 ± 3.1 | 31.6 ± 1.7 |
| ADF | 22.0 ± 1.4 | 20.9 ± 1.95 |
| Fat | 3.76 ± 0.37 | 4.15 ± 0.58 |
| starch | 25.5 ± 1.5 | 22.0 ± 1.0 |

Chemical composition is the average (± standard deviation) from
wet chemistry analysis of rations from all three farms included in the study.

**FIGURE 3**

| Effects of DEMP on milk production and blood metabolites. | | | | |
|---|---|---|---|---|
| | DEMP[1] | Control | SEM | *P*-value |
| Milk, kg/d | 33.8 | 31.5 | 1.1 | 0.11 |
| ECM[2], kg/d | 36.1 | 33.3 | 0.8 | 0.09 |
| FCM[3], kg/d | 36.4 | 33.4 | 1.1 | 0.09 |
| Milk fat, % | 3.96 | 3.86 | 0.05 | 0.03 |
| Milk fat, kg/d | 1.34 | 1.22 | 0.03 | 0.09 |
| Milk protein, % | 3.34 | 3.34 | 0.06 | NS |
| Milk protein, kg/d | 1.13 | 1.05 | 0.02 | 0.04 |
| DMI, kg/d | 24.2 | 23.7 | 0.5 | 0.12 |
| BHBA[4], mmol/L | 0.73 | 0.63 | 0.03 | <0.01 |
| NEFA[5], mmol/L | 0.14 | 0.19 | 0.04 | NS |
| BUN[6], mmol/L | 4.95 | 4.53 | 0.04 | 0.02 |

1DEMP = 600 g/hd/d DEMP; control = 0% DEMP
2Energy-corrected milk
3Fat-corrected milk
4β-hydroxybutric acid
5Non-esterifi ed fatty acids
6Blood urea nitrogen

## FIGURE 4

Constituents of the experimental diets of Example 2.

| Dry Matter % | Cont (0) | 300 | 600 | 900 |
|---|---|---|---|---|
| Corn Silage | 41.6 | 41.6 | 41.6 | 41.6 |
| Alfalfa hay | 18.9 | 18.9 | 18.9 | 18.9 |
| Soybean, Meal (46.5% CP) | 9.09 | 9.09 | 9.09 | 9.09 |
| **Soybean, Meal ( 44% CP)** | 3.41 | 2.28 | 1.14 | 0 |
| **Dietary supplement composition** | 0 | 1.14 | 2.28 | 3.41 |
| Soybean,Hulls | 1.89 | 1.89 | 1.89 | 1.89 |
| DDG | 4.91 | 4.91 | 4.91 | 4.91 |
| Corn ground dry | 17.0 | 17.0 | 17.0 | 17.0 |
| Tallow | 0.94 | 0.94 | 0.94 | 0.94 |
| Mineral mix (Ca 17:P 21) | 0.23 | 0.23 | 0.23 | 0.23 |
| Salt | 0.34 | 0.34 | 0.34 | 0.34 |
| SodiumBicarbonate | 0.36 | 0.36 | 0.36 | 0.36 |
| Limestone | 0.38 | 0.38 | 0.38 | 0.38 |
| Magnesium Oxide | 0.15 | 0.15 | 0.15 | 0.15 |
| Calcium Carbonate | 0.57 | 0.57 | 0.57 | 0.57 |
| Vitamin premix[1] | 0.09 | 0.09 | 0.09 | 0.09 |
| Vitamin E[2] | 0.02 | 0.02 | 0.02 | 0.02 |

1. Contained: 4.3% Zn, 3.8% Mn, 7,800 ppm Cu, 900 ppm I, 315 ppm Co, 220 ppm Se, 5,632,000 IU/kg vitamin A, 1,408,000 IU/kg vitamin D3, 18,700 IU/kg vitamin E (Vita Plus Corporation, Madison, WI)

2. Contained: 20,000 IU/kg.

FIGURE 5

Nutrient composition of the experimental diets[1]

| Nutrient | CONTROL | 300 | 600 | 900 |
|---|---|---|---|---|
| DM | 48.1 | 48.3 | 47.7 | 48.2 |
| CP (% DM) | 16.1 | 16.0 | 16.0 | 15.9 |
| NEl[2] (Mcal/kg DM) | 1.56 | 1.56 | 1.56 | 1.56 |
| NDF (% DM) | 34.7 | 34.6 | 34.5 | 34.5 |
| ADF (% DM) | 22.3 | 22.2 | 22.1 | 22.1 |
| Sartch (% DM) | 23.7 | 23.7 | 23.6 | 23.6 |
| Fat (% DM) | 3.7 | 3.7 | 3.7 | 3.6 |
| Ca (% DM) | 0.9 | 0.9 | 0.9 | 0.9 |
| P (% DM) | 0.4 | 0.4 | 0.4 | 0.4 |

1. Calculations based on individual ingredients analysis.

2. NRC, 2001.

**FIGURE 6**

Nutrient composition of the experimental diets[1]

| Nutrient | CONTROL | 300 | 600 | 900 |
|---|---|---|---|---|
| DM | 46.8 | 47.1 | 46.7 | 47.2 |
| CP (% DM) | 17.5 | 17.3 | 17.2 | 17.2 |
| NEI (Mcal/kg DM) | 1.60 | 1.60 | 1.60 | 1.61 |
| NDF (% DM) | 32.8 | 32.1 | 32.5 | 32.5 |
| ADF (% DM) | 23.6 | 22.9 | 22.7 | 22.6 |
| Sartch (% DM) | 22.7 | 23.4 | 22.7 | 23.3 |
| Fat (% DM) | 4.28 | 3.97 | 3.87 | 3.86 |
| Ca (% DM) | 1.08 | 1.14 | 1.03 | 1.08 |
| P (% DM) | 0.43 | 0.46 | 0.44 | 0.44 |

1. Analyzed by DairyLand Laboratories Inc. (Arcadia, WI).

**FIGURE 7**

Production results

|  | Control | 300 | 600 | 900 | SEM | L | Q |
|---|---|---|---|---|---|---|---|
| DMI, kg/d | 25.9 | 27.1 | 25.9 | 26.6 | 0.7 | 0.57 | 0.59 |
| Milk, kg/d | 40.3 | 41.5 | 41.2 | 41.4 | 1.2 | 0.20 | 0.33 |
| **FCM, kg/d** | **36.3** | **38.4** | **38.8** | **37.8** | **1.1** | **0.20** | **0.08** |
| **ECM, kg/d** | **39.5** | **41.5** | **41.8** | **41.0** | **1.2** | **0.20** | **0.09** |
| **Fat, %** | **3.53** | **3.66** | **3.62** | **3.53** | **0.14** | **0.82** | **0.06** |
| **Fat, kg/d** | **1.35** | **1.45** | **1.49** | **1.42** | **0.57** | **0.26** | **0.07** |
| Protein, % | 3.09 | 3.12 | 3.10 | 3.12 | 0.05 | 0.60 | 0.78 |
| Protein, kg/d | 1.23 | 1.27 | 1.27 | 1.26 | 0.04 | 0.39 | 0.42 |
| **MUN, mg/dL** | **13.4** | **13.7** | **13.5** | **12.9** | **0.5** | **0.08** | **0.05** |
| ECM/DMI | 1.52 | 1.55 | 1.60 | 1.56 | 0.04 | 0.28 | 0.29 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4199561 A
- US 3619200 A
- WO 2006001968 A
- WO 2006099153 A
- US 6231895 B
- US 5767080 A

### Non-patent literature cited in the description

- **NETEMEYER et al.** *J. Dairy Sci.,* 1980, vol. 63, 574-578
- **FASTINGER et al.** *J. Anim. Sci.,* 2003, vol. 81, 697-704
- Production of yeasts and yeast products. **PEPPLER, H.J.** Microbial Technology & Microbial Processes. Academic Press, 1979, vol. 1
- Remington's Pharmaceutical Sciences. Mack Publishing, 1990, 1288-1300
- **FURIA ; PELLANCA.** Fenaroli's Handbook of Flavor Ingredients. The Chemical Rubber Company, 1971